Europäisches Patentamt

European Patent Office

Office européen des brevets

(11) Publication number: 0 297 737 A2

# EUROPEAN PATENT APPLICATION

(21) Application number: 88305204.5

(22) Date of filing: 08.06.88

(51) Int. Cl.⁴: G01V 1/28

(30) Priority: 29.06.87 US 67752

(43) Date of publication of application:
04.01.89 Bulletin 89/01

(84) Designated Contracting States:
DE FR GB NL

(71) Applicant: Conoco Inc.
1000 South Pine Street
Ponca City Oklahoma 74603(US)

(72) Inventor: Bakker, Marvin L.
1708 Bradbary
Ponca City Oklahoma 74601(US)
Inventor: Johnson, James H.
746 Bison
Houston Texas 77079(US)

(74) Representative: Davies, Christopher Robert et al
Frank B. Dehn & Co. Imperial House 15-19 Kingsway
London WC2B 6UZ(GB)

(54) Three-dimensional iterative structural modeling of seismic data.

(57) A process of three-dimensional iterative modeling where input data in the form of such as seismic time sections, related interval velocity information and seismic line location data are used to generate a three-dimensional depth-velocity model whose computed time response is compatible with the seismic data. The process functions to compare synthetic time sections with original data and then iteratively changing the model until the synthetic data is sufficiently close to the real data. Layers in the depth model are defined by gridded depth maps, velocity information is specified for each layer, and the time response of the model is computed by raytracing.

EP 0 297 737 A2

# THREE-DIMENSIONAL ITERATIVE STRUCTURAL MODELING OF SEISMIC DATA

The invention relates generally to seismic data processing and, more particularly, but not by way of limitation, it relates to an improved process using digital computer for analyzing volumes of spatially related seismic data within a three-dimensional boundary to ascertain more clearly the structural conditions and anomalies therein.

The prior art has included structural modeling in the two-dimensional realm by processing seismic depth and time section data and generating seismic travel ray paths that may further accentuate certain subsurface anomalies. U.S. Patent No. 3,671,929 entitled "Conversion of Seismic Depth Sections to Seismic Time Sections" issued to W.H. Ruehle et al. teaches depth and time section processing in order to specify the velocity, thickness and depth of each reflecting zone of a subsurface formation and, thereafter, subsequently generating upward ray paths normal from each sampling point in order to plot accurate energy travel times. The travel time determinations may then be repeated for each of selected succeeding reflecting zones to generate a time section for iterative comparison to the original seismic trace data. The system functions entirely in two-dimensional format in an attempt to generate a more accurate synthetic seismic time section that will better stand comparison to original field data.

Additional prior work of some relevancy was presented in 1982 at the Society of Exploration Geophysics in Dallas, Texas in a presentation paper given by Mr. Gary Lundquist and Mr. George Mellman, entitled "Three-Dimensional Ray Tracing". This method was developed by employees of Sierra Geophysics and the procedures evolved into a 3-D ray tracing software package which was available for licensing in the industry. In this case, raytracing data was used to reconstruct synthetic seismic traces with proper event amplitudes for specified source-receiver locations.

It is an object of the present invention to provide a method for developing a three-dimensional earth model with accurate structural relationships.

The present invention provides a method of programmed data processing to effect three-dimensional structural modelling of seismic data, comprising:

inputting seismic data relating to at least one seismic time section located on a selected base map area and including selected time events, interval velocity data relating to said at least one seismic time section, and seismic line location data relating to said at least one seismic time section;

defining a three-dimensional model of the base map area in grid increments including the depth maps of at least one subsurface layer of selected depth and thickness;

forward modeling using raytracing to compute synthetic time responses for a depth-velocity model wherein at least one subsurface layer depth map is selected as the reflector relative to a seismic line location, and modifying the three-dimensional model with said synthetic time responses for each of the at least one depth maps to improve the approximation;

iterating said forward modeling and modifying steps to refine the approximation; and

outputting data representative of a three-dimensional depth-velocity model that is compatible with the seismic data for the base map area.

The method of the present invention utilizes unmigrated seismic time sections with a number of marked time events for some given area of interest, along with some type of interval velocity information, e.g. such as derived from well logs. The method then generates a three-dimensional depth-velocity model through iterative operations to arrive at a final model whose computed time response is compatible with the seismic data. Synthetic time sections are developed from the original data for iterative comparison and changing of the model until the synthetic data is sufficiently close to the real data.

Layers of interest in the depth model are defined by gridded depth maps and velocity information is specified for each layer, either as a constant value or as a gridded velocity map. Thereafter, the time response of the depth model is computed by a ray tracing procedure relative to the line of seismic data, and a synthetic seismic section can then be plotted for the line location for comparison with the original seismic section. The required computer time is relatively low since the synthetic sections plot only trace travel times and disregard trace amplitudes, and time points are gathered only for a line location and not for individual source-receiver locations. Editing of data to change the depth model is done in a semi-quantitative way by using the time differences between the synthetic and real data, velocity information, and plan-view ray path plots, thereby to derive an indication as to where depth contours must be adjusted.

It will be seen that the method of the invention provides a maximum of three-dimensional earth data while utilizing relatively standard and available two-dimensional seismic data.

The method uses an iterative modeling process for deriving a three-dimensional depth-velocity model that may be compatible with existing seismic and well data for the selected area of interest.

The method may be used to derive a depth-velocity model for an earth volume that functions to more accurately locate prior wells in relation to the seismic data thereby to enable accurate positioning of new wells and/or optimal positioning for future seismic lines.

An embodiment of the invention will now be described, by way of example only, with reference to the drawings, in which:

Figure 1 is a basic block diagram illustrating the three-dimensional iterative structural modeling process;

Figure 2 is a flow diagram showing the basic steps that may be used to build a 3-D depth-velocity model from unmigrated seismic data;

Figure 3 is a procedural flow diagram illustrating the program modules for carrying out 3-D iterative structural modeling;

Figure 4 is a contour plot printout of a depth map;

Figures 5A, 5B, and 5C illustrate in idealized form the selection of grid values relative to two intersecting depth maps;

Figures 6A, 6B and 6C illustrate in idealized cross-section three types of problems encountered in model building;

Figures 7A, 7B, 7C and 7D illustrate in idealized form the extended surfaces and resulting five-layer model for a particular structural pinch out;

Figure 8 is an illustration in idealized form of a three layer model where a portion of the middle layer has zero thickness;

Figure 9 illustrates the method for representing a ray path in cross section through a variable velocity layer;

Figure 10 is a depth cross section printout for the line of Figure 11A;

Figure 11A is an area base map illustrating a seismic line layout;

Figure 11B is a time plot printout for the line of Figure 11A;

Figure 12 is a printout of ray path indications for the line of Figure 11A;

Figure 13 is a ray path plot combined with a contour plot for a selected depth map; and

Figure 14 is a printout of reflection point data combined with a contour plot for the selected depth map.

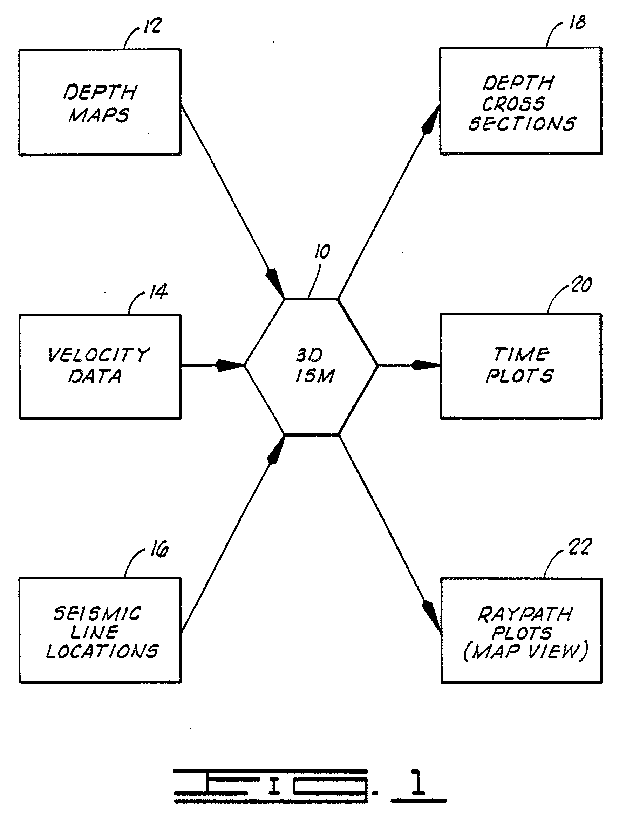

Figure 1 illustrates the various data inputs and outputs relative to the program or process 10 for carrying out three-dimensional iterative structural modeling, hereinafter referred to as "3-D ISM". The process 10 is a package of individual computer programs or modules as will be further described below. For a selected earth area of interest, inputs to process 10 may be derived from such as unmigrated seismic time sections for the area with a number of time events marked by a seismic interpreter and additional interval velocity information such as that derived from well logs in the area.

Thus, inputs may consist of depth maps 12, existing velocity data 14 and seismic line locations 16. The input data may be specifically prepared in requisite grid format or it may be called in from existent data collection files maintained relative to a centralized data processing system.

A depth map input 12 may consist of such as a 3-D depth-velocity model in the form of a set of gridded depth maps. In such a depth model, the top of the model is placed at a depth equal to zero and individual depth maps therebelow are numbered sequentially 1 through J to the deepest depth map. The individual depth maps 1 through J are individually gridded on a like scale, as will be further described, and at any grid point the map J + 1 should be at least as deep as map J, i.e., no map should pierce another. Individual layers of depth map are defined across the entire depth model, whatever the selected areal boundaries, and undefined areas can be represented by nil values or equivalent values obtained from processing of another map. In the case of one map attempting to pierce another, it may be truncated to indicate a layer of zero thickness. Velocity information within each depth map layer may be constant for the entire layer or it may be represented by further gridded velocity maps across the layer.

The program functions using a procedure that may be referred to as "forward modeling" which describes the step of computing the time response for a depth-velocity model. Time values are computed for all depth maps that the operator declares to be reflectors. A ray tracing routine then sends up rays from every defined grid point of each reflecting depth map or layer, with initial direction normal to the reflecting point and subsequent bending of the rays in accordance with Snell's law as they encounter the respective depth maps between the reflector layer and the top of the model. Rays are lost if they go off the edge of the model or encounter an undefined area in the map. Travel times are computed from the velocities and raypath lengths in each layer and the total travel time for a ray is multiplied by two to equalize the two-way travel time. The two-way travel time and the X, Y location where the ray is designated as reaching the top of the model are then stored as an X, Y, T point. Typically, several thousand X, Y, T points will be stored for each reflector or depth map layer, and no attempt is made to compute amplitude information.

Reflection time plots, to be further described below, for particular seismic line locations are processed to determine the individual time points therealong. In this procedure, all pairs of rays that start from adjacent grid nodes on a depth map reflector are considered. If adjacent rays terminate on opposite sides of the seismic line, then the two X, Y, T points are interpolated to the seismic line and a symbol is plotted. An exception is that rays that terminate a very large distance apart are not used (this distance value can be set by the user).

Various output data may be printed out from the 3-D ISM process. Depth cross-sections 18 enable output of a section through the 3-D model showing one or more selected depth reflector layers. Time plots 20 may be called on to print out similar section data for specific reflection point times and such synthetic reflection time compilations may be used in the iterative procedures.

A plan-view raypath plot may be requested as at output stage 22 and this prints out a raypath plot and may include in combination a depth contour plot of the reflecting stratum or layer. Thus, for each reflection time point that gets plotted on some grid point of some depth map 1 through J, a corresponding raypath is plotted to show progression from its starting point to where it reached its seismic line position. Each raypath plot may include more than one seismic line location but it is derived for only a single depth map that defines a specific reflecting horizon as will have been selected by the operator.

One way of comparing the synthetic time sections as derived at output stage 20 with the real seismic line data, is to plot the synthetic data on transparent film at the same scale as the real data which then allows overlay of the synthetic data on the original seismic section data for comparison purposes. Such a comparison may also be done by putting both sets of data on a terminal screen. Letting $\Delta T$ be the difference between the computed time response and the real data at some location, and using V for the interval velocity in that location, the depth error factor is

$$\Delta D = \frac{V \times \Delta T}{2} \qquad (1)$$

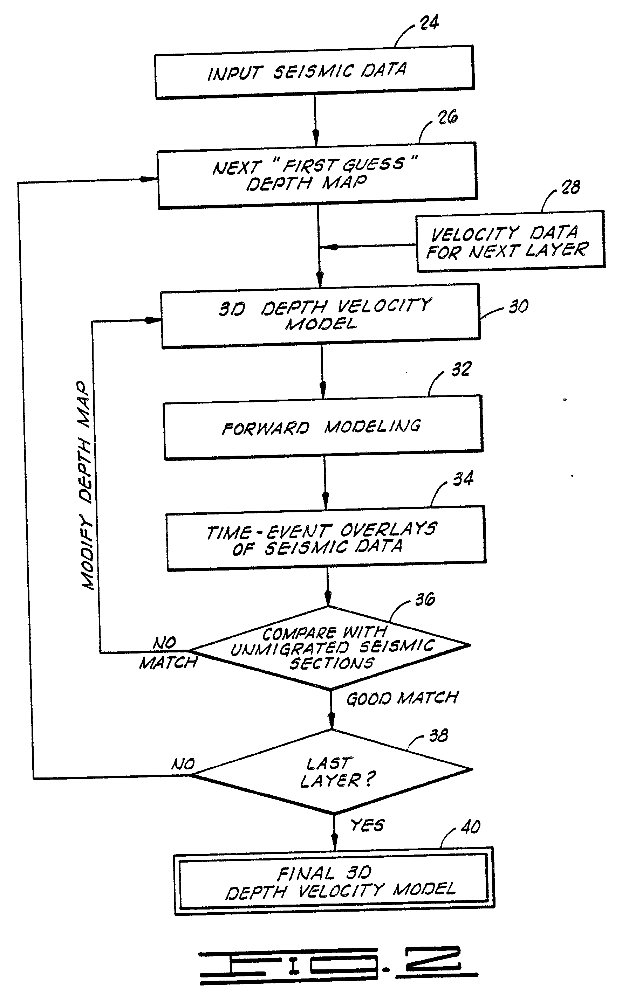

The operator may then modify the depth contour plot for that particular map in accordance with the depth correction fac tor using the raypath plot to indicate where to modify the depth contours. The modified depth contour plot is then digitized and the data is gridded to give a new depth map for that model. Such iteration may continue by going back into the forward modeling step and repeating procedures as indicated generally in the flow chart of Figure 2.

Figure 2 illustrates the 3-D modeling flow chart showing basic steps that may be used in building a 3-D depth velocity model from unmigrated seismic data. The input seismic data is input at stage 24 and this may include such as a seismic section taken along a designated survey line in an earth area of interest with time, depth and line location data contained therein. Additional velocity information, e.g., from such as an existing well bore in the area, is also input. At stage 26 a first-guess depth map is constructed for the selected depth layer by designating boundaries and gridding relationships. Input stage 28 then provides data relating to the depth-velocity model of the next layer that will overlie the depth layer.

The 3-D depth-velocity model for the selected layer is constructed in flow stage 30 as forward modeling is carried out in stage 32. The forward modeled data is then compared with time-event overlays in flow stage 34 and this data is compared with the basic unmigrated seismic data at stage 36 to bring about a best match of the processed data. If poor match is determined at decision stage 36, then the procedure repeats through 3-D model stage 30 and forward modeling 32 to modify or refine data variations to construct a more true model. When a good match is believed to be achieved, the flow proceeds to decision stage 38 which tests for last layer. If additional layers are needed, the process repeats from flow stage 26 for the next estimated depth map. This procedure is effected repeatedly for all successively deeper layers of the depth model until final construction and output of the complete 3-D depth-velocity model at output stage 40.

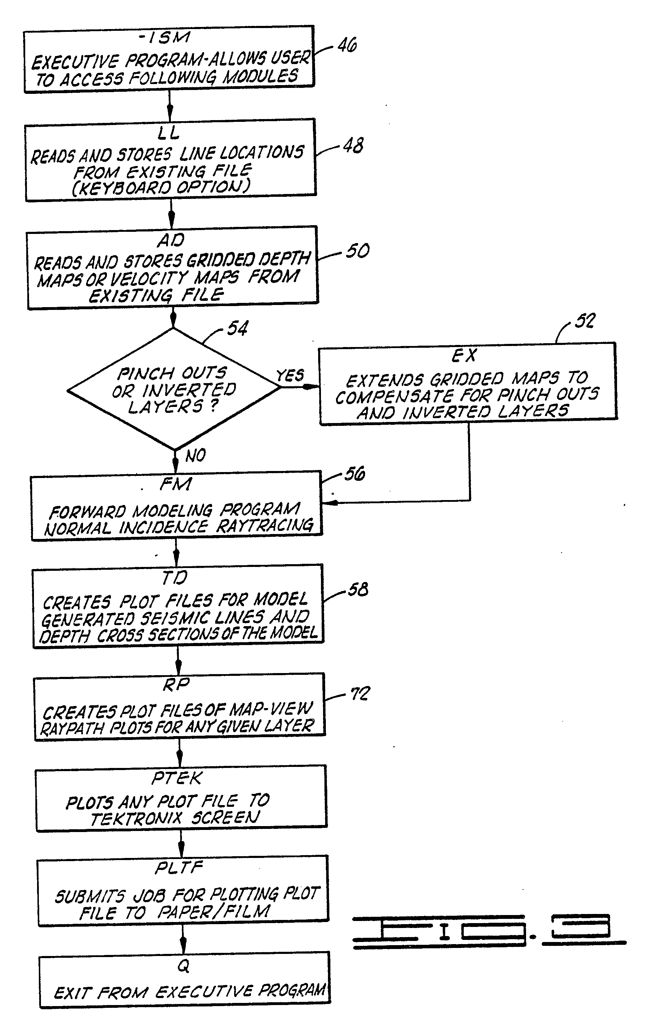

The 3-D ISM modeling program is presently programmed into a Cyber computer and the basic program modules and their interactive and sequential rela tionships are illustrated in Figure 3. To begin modeling, one must first select a base map that covers the area of interest and has seismic lines and well locations or other velocity data included thereon. The extent of an area to be modeled will depend on the dip of reflectors in the area and the degree of accuracy required to image structures of interest. To capture normal incident rays from a dipping reflector, the areal extent of the model at the surface (on the base map) will normally need to be greater than the areal extent of the horizon or subsurface layer of interest. With these points in mind, the user can locate a square or rectangular area on the base map that will encompass the area to be modeled.

The accuracy of the model is a function of grid spacing. Within the area to be modeled, the model is defined as plural gridded depth maps, each with equal grid increments along the X and Y axes. The total number of grid points is limited to 10501; for example, 101 X 101 grid points or 201 X 51 grid points. Thus, a model which is ten miles by ten miles could have a grid increment no smaller than 528 feet, but if a grid spacing of 528 feet is too large to resolve structures of interest, then smaller areas can be chosen, e.g., four areas each five miles square or perhaps overlapping areas six or seven miles square.

The number of layers used in a model will depend upon the complexity of the given area. Because of constraints on the way models are defined, a single geologic layer may have to be entered as multiple layers in the model, e.g., in the case of some faulted structures. Also, a very thick layer on the order of ten thousand feet might need to be defined as two or three layers so that the raypaths will more closely approximate the curved-ray effect. Nonetheless, most models will have fewer than ten layers, and the program limit of fifty layers should be quite adequate.

As also shown in Figure 1, three types of input data are needed to execute the 3-D ISM program, i.e., gridded depth maps 12, layer interval velocity data 14, and the location of seismic lines 16. Preliminary depth maps 12 can be generated by converting time structure maps to depth parameters in well-known manner. Contoured depth maps require digitization and gridding in designated scale, and these procedures can be carried out using any of a number of mapping and gridding programs. From velocity data 14, the interval velocities or interval velocity maps for each layer of the model must be determined. Interval velocities can be calculated from existing seismic and/or well data in wellknown manner and input to the system. If both time and depth maps are available for the area, laterally varying interval velocity maps may be computed for each of the successive layer maps within the model. This data may be readily derived from previously digitized contoured time and depth maps. The location of individual seismic survey lines at 16 may be read from a digitized file or entered by a keyboard; however, it should be kept in mind that the reference coordinates for the seismic lines must also be the same as those used for other model input such as gridding of the depth maps and interval velocity maps.

The total 3-D ISM modules are controlled under an executive program titled "ISM" at flow stage 46. Very little user input is requested at the executive level other than bookkeeping entries. The executive program allows control of certain operational prompts and other general information. Most ISM data is stored in project files, each of which is identified by a four character project code as specified by the user. The ISM executive program begins by asking for the project code which is then used for the entire ISM procedure. The only way to go to a new project code is to exit from ISM and begin a new procedure by again typing in "ISM".

The map size parameters must be specified at the time a project file is initialized, and they cannot be changed later for that project file. The units for the X, Y origin, X, Y limits, and X, Y grid increments should be the same as those used for the gridded depth maps. The total number of grid points is limited to 10501 and this allows for either square or rectangular maps so long as they comply with the multiple of possible grid points.

Data stored in the project files includes:

(1) seismic line coordinates, identified by line name;

(2) gridded depth maps, identified by map number and map type;

(3) gridded velocity maps, identified by map number and map type;

(4) computed time responses wherein three separate maps are used to store each set of X, Y, T points;

(5) parameter values for ISM modules; and

(6) job set ups for modules TD and RP (to be described).

A module LL at flow stage 48 functions to store seismic line locations on a project file for use by modules TD and RP, to be described. Each seismic line is identified by a line number (or line name) of up to ten characters, and each project file may have up to sixty lines with no more than 50 coordinate pairs per line. Keyboard mode lets you type in line location coordinates or, alternatively, data may be read in from a digitized base map file so long as the coordinate system is the same. Ancillary digitizing programs of wellknown type are available and these may be accessed by keyboard option for such as digitizing time and/or depth contour plots and digitizing line locations from a selected base map.

The module LL clips seismic lines to the selected model edges so that a base map file can be used that includes a larger area than the limits of the current project file. If a seismic line goes beyond the model boundaries and then comes back within the boundaries, the outside portion is replaced by a segment joining the exit point and the entry point. Module LL stores the length of each line, after clipping, in distance units and this can be used to help set the horizontal scale factor in the module TD to maintain correct overlay on the original data.

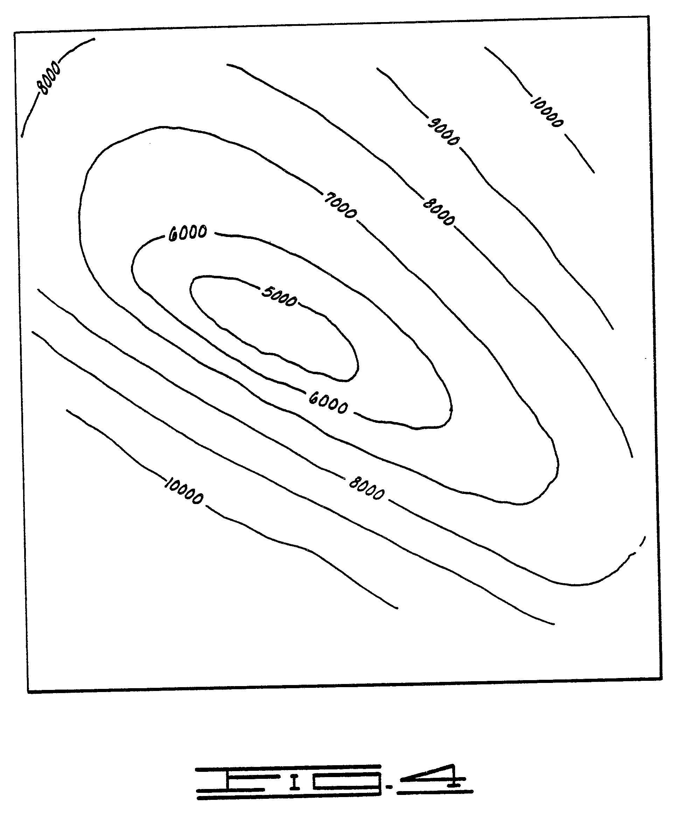

Flow stage 50 contains a module AD which functions to read non-ISM data files and to store gridded depth maps or velocity maps to the ISM project file. The depth model consists of an ordered set of gridded depth maps with the top surface assumed as a flat surface at zero depth. Below that, the depth maps are numbered consecutively one through J (deepest) and grid coordinates align through all maps. As much as possible, maps should be defined across the entire model, and module EX at flow stage 52 functions to extend and modify maps and build models that meet the necessary contraints, as will be further described. A contour plot for a selected depth map is shown in Figure 4.

A decision stage 54 tests the data for pinch outs or inverted layers and, if affirmative, the program module EX at stage 52 functions to extend and modify the gridded maps, with return to the main flow at forward modeling stage 56.

The forward modeling routine traces each ray upward from reflecting map J to map J-1, etc. until the ray reaches the surface (or goes off an edge), special measures are required where an undefined region may be related to a pinch out or inversion. Module EX handles such situations by extending the map or modifying the map to give a zero-thickness region definition. The modified model may then be checked by using module TD at flow stage 58 to display depth cross sections. For very complicated models, some trial-and-error may be required to get the layers defined appropriately. In a case such as this, the module AD (stage 50) may be required to re-read some of the maps from their original source.

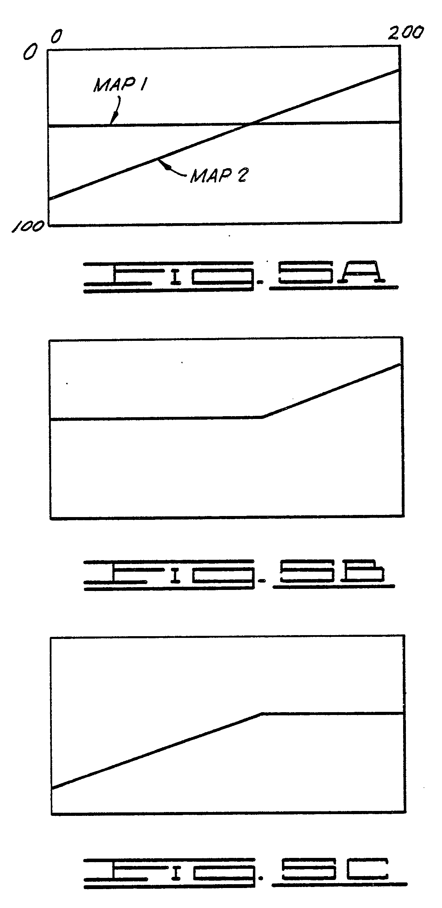

The output from module EX consists of a new map generated from two input maps. The map needing modification is compared with a reference map or with a constant value used as a reference. At each grid point, the new map will be the largest (or smallest depending on which option is specified) of the two map values. Also, depending on which option is specified, nil values may be replaced by values from the reference map, but a nil value will also be output from any grid point where both input maps have nil values. Thus, Figure 5A illustrates a cross section through two depth maps and the resulting Figure 5B as generated by using smallest grid values from map 1 and map 2. Figure 5C would be generated by using largest grid values from map 1 and map 2.

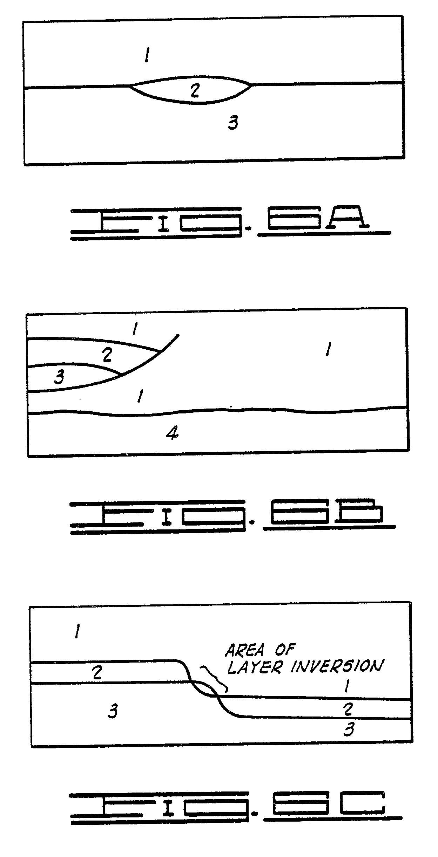

To illustrate the use of module EX, three types of problems are considered in Figures 6A-C; these are stratigraphic pinch outs, structural pinch outs and inverted layers where a portion of a deeper map extends shallower than the overlying map. Referring to Figure 6A, the stra tigraphic pinch out can be defined by two depth maps consisting of a map 1 for the bottom of layer one and a map 2 which is discontinuous for the bottom of layer two. Assume that the gridding for map 2 extrapolated some data above map 1 and left large areas undefined, then module EX will generate a new map 2 by using largest values from maps 1 and 2 and replacing undefined parts of map 2 with values from map 1 which would then function as the reference map. The new map 2 is then continuous across the model and layer two has a zero thickness where map 2 is extended. Figure 6B illustrates a more complicated model for the structural pinch out assuming maps on the top of layers 2, 3, and 4 as well as the fault surface, the model can be constructed as follows (including nil value replacement in each step):

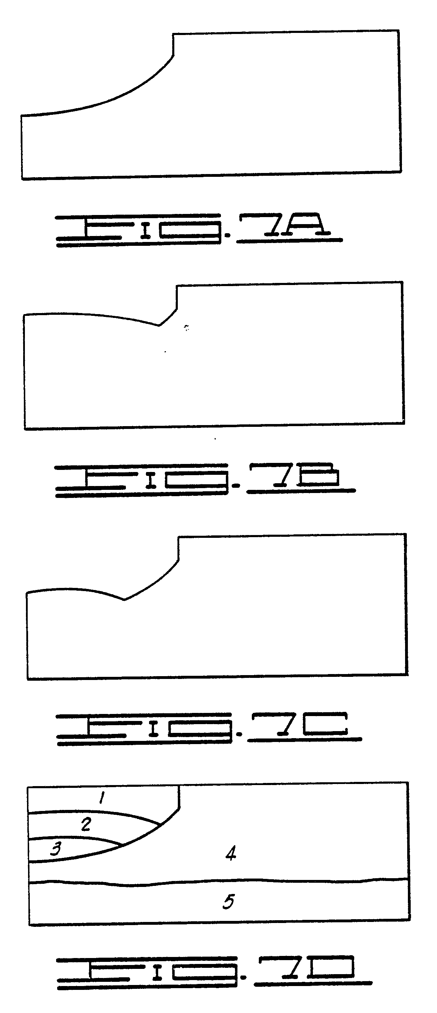

(1) generate extended fault surface map by using largest values from the fault surface map and a constant value of zero as in Figure 7A;

(2) generate an extended map on top of layer two by using smallest values from top of layer two and the extended fault map as shown in Figure 7B; and

(3) generate extended map on top of layer three by using smallest values from the top of layer three and the extended fault map as shown in Figure 7C.

Figure 7D illustrates the resulting five-layer model for the structural pinch out (compare Figure 6B). It may be noted from the final layer numbering that the original layer 1 is now defined as two layers 1 and 4. Thus, if interval velocities are, for example, 9600, 10000, and 12000 feet per second for original layers 1, 2 and 3, respectively, then the layer-velocity pairs to module FM at stage 56 would be entered as

Layer 1 - 9600
Layer 2 - 10000
Layer 3 - 12000
Layer 4 - 9600

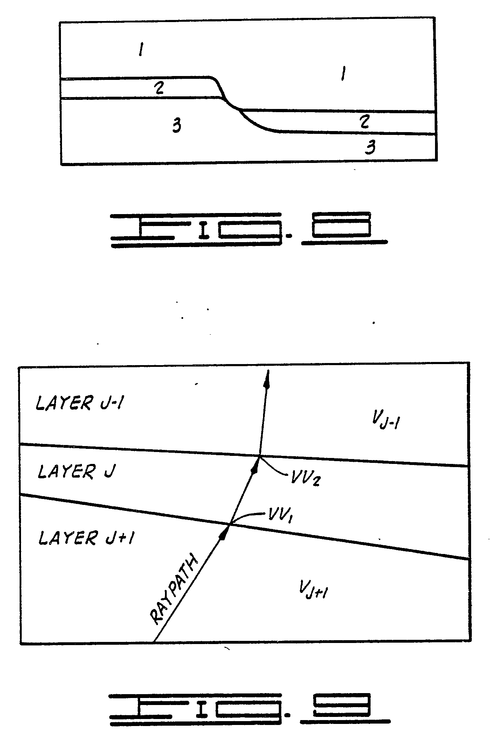

Referring again to Figure 6C for the case of layer inversion, it sometimes occurs that portions of layers are inverted because of gridding inaccuracies or other problems. Inverted layers shown in Figure 6C may be corrected by generating a new map for the bottom of layer 2 that is based upon the largest values from the bottom of layer 1 (map 1) and the bottom of layer 2 (map 2). The new model will then have the original map 1 plus the corrected map 2 as shown in Figure 8, and where the initial model had inverted layers, layer 2 will now show zero thickness.

A negative showing from decision stage 54 with no pinch out or inverted layers will proceed to the forward modeling module FM at flow stage 56 to effect processing in accordance with a relatively simple raytracing algorithm to compute time responses for the depth-velocity model. Thus, for each grid point of the designated reflector map, a normal ray will be sent up. This ray is then bent in accordance with Snell's Law as it intersects successive depth maps above the designated reflector, and the raypath travel times are computed through each layer by using the interval velocities and raypath lengths per layer. The arrival time at the surface is the sum of all such travel times multiplied by two, the two way energy travel time. The arrival time and the X, Y coordinate at which the ray hits the surface are then stored as the X, Y, T points, and only valid rays within the defined area may be retained.

For module FM, times may be computed for any set of depth maps, computations for each reflecting map are independent of each other such that, if only one depth map has been changed, times need to be recomputed only for that map and any deeper maps and maps thereabove are not affected. Interval velocities for layers are specified in module FM as layer-velocity pairs, one layer at a time. For layers that have laterally varying velocities, -1 is specified in place of the velocity value.

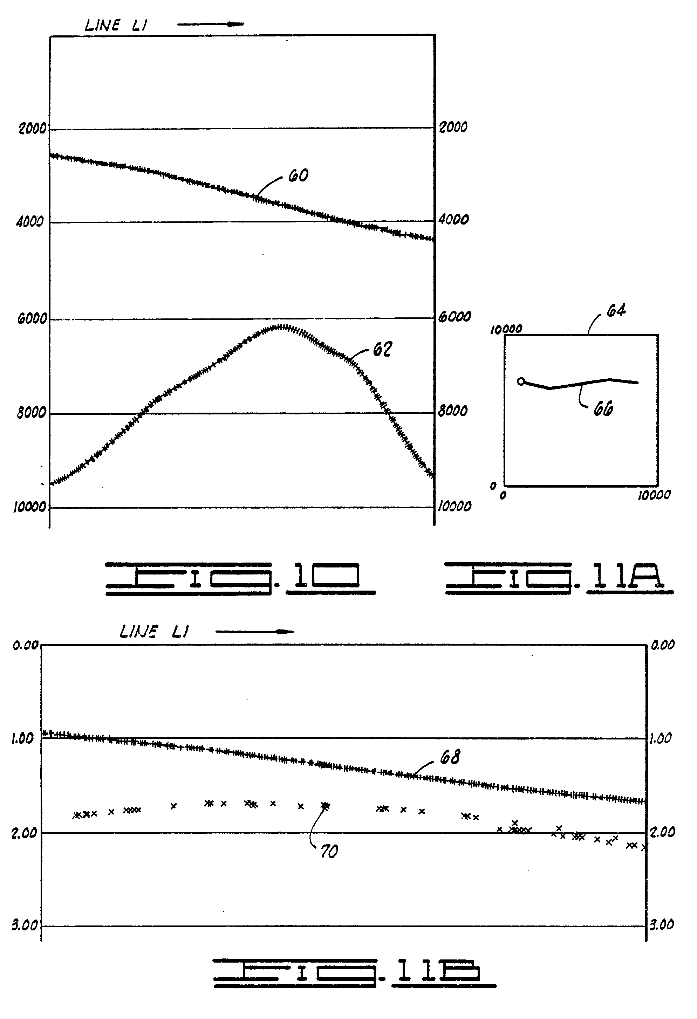

Figure 9 illustrates how the module FM handles lateral velocity variations in a layer J. The velocity used for the travel time through layer J is the average of the entrance point velocity $VV_1$ and the exit point velocity $VV_2$. The raypath bending is also determined by the velocities at the entry and exit points. For example, the velocities used in Snell's Law to determine the interface between layer $J+1$ and layer J are $V_{J+1}$ and $VV_1$. No attempt is made to curve the raypath within the layer J.

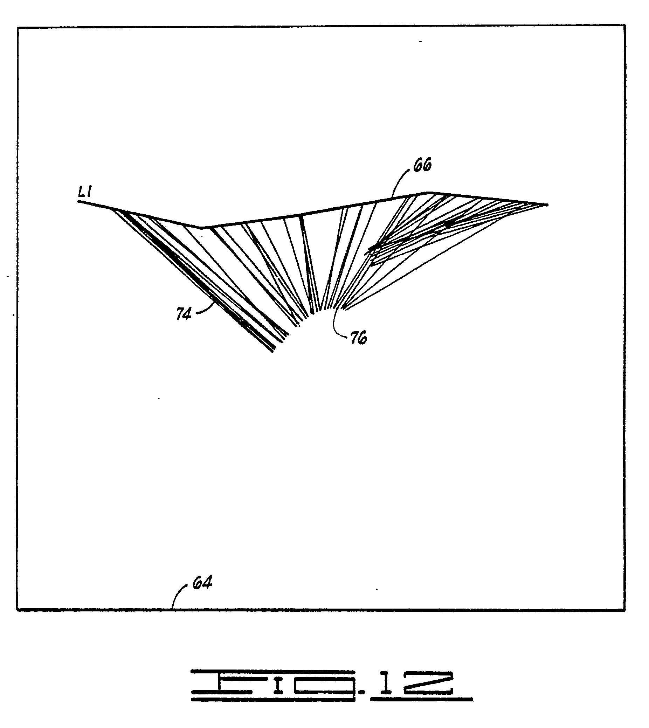

Proceeding to flow stage 58, after one or more depth maps are stored in the project file, the module TD can be called up to generate a depth cross section along any specified line. Figure 10 illustrates such a depth cross section as printed out for a line L1. The depth cross section illustrates data symbol designations for two selected strata, stratum 60 passing through the 3000 foot depth and stratum 62 illustrating a steeper dome structure and extending between 6000 and 10000 foot depths. Such depth cross sections as that of Figure 10 are primarily used to check the depth model, especially when module EX has been used to extend or modify some of the depth maps. In addition, depth cross sections can show whether the layers have been defined in a way that is geologically reasonable.

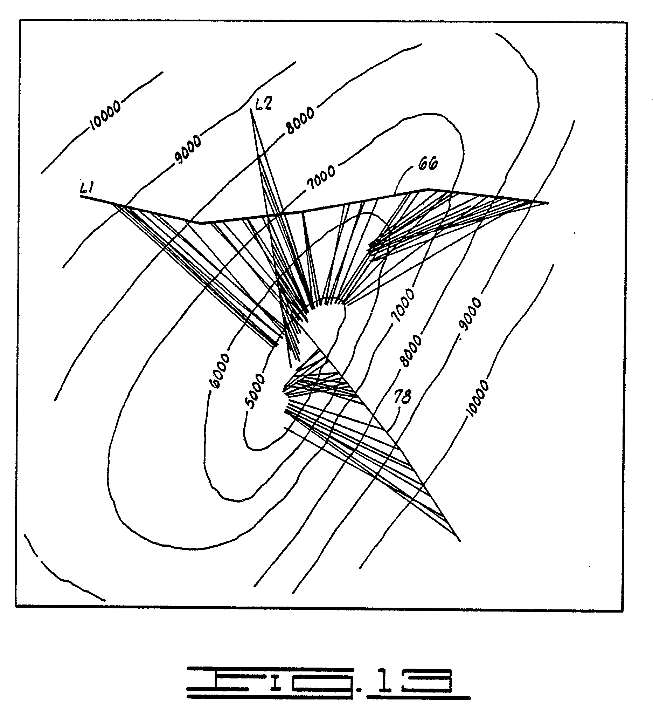

The module TD at flow stage 58 may also function to display forward modeling results such as synthetic time sections for specified seismic lines as shown in Figures 11A and 11B. Thus, Figure 11A illustrates the areal base map 64 in relation to the seismic line L1 shown as line 66. The time plot section is shown in Figure 11B for line 66 or line L1 as it shows the events for a lesser time 68 and a greater time 70. The time plots 68 and 70 do not illustrate synthetic trace amplitudes but instead are plotted as symbols showing only arrival times at the reflecting maps. When scale factors are set appropriately in module LL, the plots such as that of Figure 11B can be overlaid on the original unmigrated time sections for comparison and meaningful adjustment of parameters.

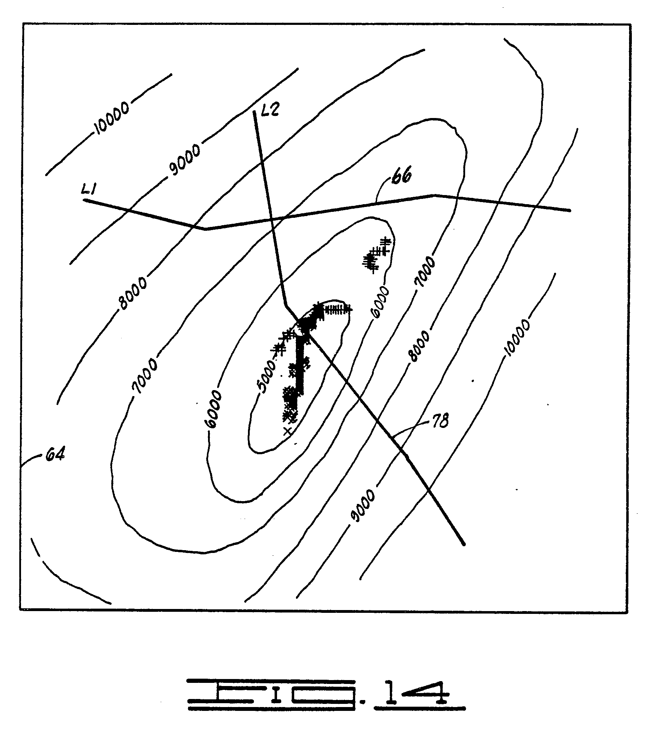

Proceeding to flow stage 72, a module RP functions to create plot files of map-view raypath plots for any given layer. Stage 72 can display raypaths in plan view, and each plot may include raypaths for one or more seismic lines but only for one reflecting map. The plots will show where each ray started up and where it terminated on the surface, but the plot is straight line and ignores any bending of the rays at intermediate horizons. If the parameters in this stage match those used in module TD to build a time plot, the raypaths should correspond to the time points that were plotted. Figure 12 illustrates a printout of the raypath plot for line L1, designated line 66 in Figure 11A, in relation to the map boundary 64. Individual raypaths 74, one for each reflection point, originate normal to the reflecting grid point, e.g., point 76, and extend upward under influence of Snell's Law to a shot point in the seismic line 66.

As iteration is done on depth model data, a key step is in the editing of depth maps. To aid in this step, overlay of a contoured depth map on the raypath plot may be made for comparison of the time plots with the original seismic sections. Where computed time points are later in time than the picked event, the corresponding raypaths can be found and the contours edited thereby to make that part of the depth map shallower. Similarly, the depth map needs adjustment deeper where the computed time points occur too early.

In addition to plotting raypaths as shown in Figures 12 and 13, the module RP in conjunction with reproduction routines PTEK and PLTF, can be used to plot seismic line locations or seismic line locations in relation to symbols showing reflection point origins as in Figure 14. Thus, Figure 14 illustrates L1 seismic line 66 as well as the L2 seismic line 78 in relation to a plurality of basement reflection points that have been derived relative to a selected substratum or depth map and as overlaying the basic contour map (Figure 4) of the earth volume within boundary 64. A display such as that of Figure 14, using all available seismic lines, provides a good indication of where a particular horizon has been imaged. In addition, proposed line locations may be modeled in order to help position additional seismic coverage.

The foregoing discloses a novel method for constructing a three dimensional depth-velocity model of an earth volume using existing seismic section data. The method basically uses seismic raypath plots to modify depth contour plots of a 3-D depth model through iterative re-shaping of depth layer relationships.

Changes may be made in combination and arrangement of steps as heretofore set forth in the specification and shown in the drawings; it being understood that changes may be made in the disclosed embodiment without departing from the scope of the invention as defined in the following claims.

## Claims

1. A method of programmed data processing to effect three-dimensional structural modeling of seismic data, comprising:

inputting seismic data relating to at least one seismic time section located on a selected base map area and including selected time events, interval velocity data relating to said at least one seismic time section, and seismic line location data relating to said at least one seismic time section;

defining a three-dimensional model of the base map area in grid increments including the depth maps of at least one subsurface layer of selected depth and thickness;

forward modeling using raytracing to compute synthetic time responses for a depth-velocity model wherein at least one subsurface layer depth map is selected as the reflector relative to a seismic line location, and modifying the three-dimensional model with said synthetic time responses for each of the at least one depth maps to improve the approximation;

iterating said forward modeling and modifying steps to refine the approximation; and

outputting data representative of a three-dimensional depth-velocity model that is compatible with the seismic data for the base map area.

2. A method as set forth in claim 1 wherein said step of defining comprises:

determining the interval velocity for each of said at least one subsurface layers.

3. A method as set forth in claim 2 wherein:

said interval velocity is constant for each at least one subsurface layer.

4. A method as set forth in claim 2 wherein:

said interval velocity is represented by a gridded velocity map for each at least one subsurface layer.

5. A method as set forth in any preceding claim wherein said forward modeling step comprises:

determining seismic energy time values and location of ray termination data for a selected map for each of the grid increments by performing upward ray tracing from each grid increment to the designated seismic line location;

compiling a synthetic time response from the time values for the selected depth map relative to said seismic line location; and

comparing the synthetic time response with the real data seismic time section for said line location to determine variances for iterative correction.

6. A method as set forth in claim 5 which further includes:

outputting a raypath plot indication of the seismic line combined with a contour plot of the depth map to determine points where depth contours require modification, and

modifying the depth contours for said depth map for output as a new depth map.

7. A method as set forth in claim 5 or 6 wherein:

the steps of determining by raytracing, compiling a synthetic time response, comparing, outputting a raypath plot, and modifying are repeated for each depth map designated in the three-dimensional model, beginning with the uppermost designated depth map and proceeding to successively lower depth maps.

FIG. 1

INPUT SEISMIC DATA — 24

NEXT "FIRST GUESS" DEPTH MAP — 26

VELOCITY DATA FOR NEXT LAYER — 28

3D DEPTH VELOCITY MODEL — 30

FORWARD MODELING — 32

TIME-EVENT OVERLAYS OF SEISMIC DATA — 34

COMPARE WITH UNMIGRATED SEISMIC SECTIONS — 36

NO MATCH

GOOD MATCH

MODIFY DEPTH MAP

LAST LAYER? — 38

NO

YES

FINAL 3D DEPTH VELOCITY MODEL — 40

FIG.2

```
          -ISM                                    ╱ 46
   EXECUTIVE PROGRAM-ALLOWS USER
    TO ACCESS FOLLOWING MODULES

            LL                                    ╱ 48
   READS AND STORES LINE LOCATIONS
        FROM EXISTING FILE
        (KEYBOARD OPTION)

            AD                                    ╱ 50
   READS AND STORES GRIDDED DEPTH
    MAPS OR VELOCITY MAPS FROM
          EXISTING FILE
```

```
         54                              52
      PINCH OUTS        YES           EX
      OR INVERTED        ───▶   EXTENDS GRIDDED MAPS TO
       LAYERS ?                 COMPENSATE FOR PINCH OUTS
                                AND INVERTED LAYERS
          NO
```

```
            FM                                    ╱ 56
   FORWARD MODELING PROGRAM
   NORMAL INCIDENCE RAYTRACING

            TD                                    ╱ 58
   CREATES PLOT FILES FOR MODEL
   GENERATED SEISMIC LINES AND
   DEPTH CROSS SECTIONS OF THE MODEL

            RP                                    ╱ 72
   CREATES PLOT FILES OF MAP-VIEW
   RAYPATH PLOTS FOR ANY GIVEN LAYER

           PTEK
   PLOTS ANY PLOT FILE TO
    TEKTRONIX SCREEN

           PLTF
   SUBMITS JOB FOR PLOTTING PLOT
    FILE TO PAPER/FILM

            Q
   EXIT FROM EXECUTIVE PROGRAM
```

FIG. 3

FIG.4

0    0                                          200

MAP 1

MAP 2

100

**FIG. 5A**

**FIG. 5B**

**FIG. 5C**

FIG. 6A

FIG. 6B

AREA OF
LAYER INVERSION

FIG. 6C

FIG. 7A

FIG. 7B

FIG. 7C

FIG. 7D

FIG. 8

FIG. 9

LINE L1 →

60

62

64

66

10000

0

10000

**FIG. 10**

**FIG. 11A**

LINE L1 →

68

70

**FIG. 11B**

LI

66

74

76

64

FIG.12

FIG.13

FIG. 14